# EUROPÄISCHE PATENTSCHRIFT

(11) **EP 2 558 327 B1**
(45) Veröffentlichungstag und Bekanntmachung des Hinweises auf die Patenterteilung: **08.05.2019**
(21) Anmeldenummer: 11714709.0
(22) Anmeldetag: 16.03.2011
(51) Int. Cl.: B60L 5/20

(54) **SCHLEIFLEISTE FÜR EINE GLEITKONTAKTEINRICHTUNG UND VERFAHREN ZUR HERSTELLUNG EINER SCHLEIFLEISTE**
SLIDING STRIP FOR CURRENT COLLECTOR AND METHOD FOR MAKING A SLIDING STRIP
GLISSIÈRE POUR COLLECTUER DE COURANT ET MÉTHODE DE FABRICATION D'UNE GLISSIÈRE

(30) Priorität: 12.04.2010 DE 102010003874
(43) Veröffentlichungstag der Anmeldung: 20.02.2013
(73) Patentinhaber: Schunk Carbon Technology GmbH, 4822 Bad Goisern (AT)
(72) Erfinder: RASTL, Hans, A-4822 Bad Goisern (AT); REISER, Klaus, 4820 Bad Ischl (AT)
(74) Vertreter: advotec.
(86) Internationale Anmeldenummer: PCT/EP2011/053998
(87) Internationale Veröffentlichungsnummer: WO 2011/128171

(56) Entgegenhaltungen:
- DE-A1- 4 441 339
- DE-C- 582 118
- DE-C- 624 930
- DE-U1- 9 316 425
- FR-A- 1 110 518
- FR-A1- 2 838 390
- GB-A- 148 529
- SU-A1- 1 572 847

## Beschreibung

Die vorliegende Erfindung betrifft eine Schleifleiste für eine mit Vorspannung gegen einen Fahrdraht anliegende Gleitkontakteinrichtung, insbesondere zur Stromversorgung von Schienenfahrzeugen, mit einem Kohlenstoff-Formkörper und zumindest einer in dem Kohlenstoff-Formkörper angeordneten, metallischen Leiteinrichtung zur Ausbildung einer lokal erhöhten elektrischen Leitfähigkeit, wobei die Leiteinrichtung zumindest eine sich in einer Ebene quer zur Gleitrichtung und in Richtung einer Vorspannkraft erstreckende Leitschicht aufweist, die durch eine an zumindest einer Flanke eines sich quer zur Gleitrichtung im Kohlenstoff-Formkörper erstreckenden Schlitzes angeordnete Schicht eines metallischen Leitmaterials gebildet ist.

Des Weiteren betrifft die Erfindung ein Verfahren zur Herstellung einer derartigen Schleifleiste.

Zur Stromversorgung von schienengebundenen, mit Elektromotoren betriebenen Fahrzeugen werden Gleitkontakteinrichtungen verwendet, die fachterminologisch auch als "Pantographen" bezeichnet werden und mit einer Schleifleiste versehen sind, die als Verschleißteil vermittels einer von dem Pantographen erzeugten Vorspannkraft gegen einen Fahrstromleiter (Fahrdraht) gedrückt werden und durch Ausbildung eines Gleitkontakts eine Stromzuführung während der Fahrt des Fahrzeuges ermöglichen.

Um auch während des dynamischen Fahrbetriebs von derartigen schienengebundenen Fahrzeugen eine möglichst kontinuierliche Aufrechterhaltung des Gleitkontakts zwischen der Schleifleiste und dem Fahrdraht zu ermöglichen, ist es bekanntermaßen von Vorteil, die Massenträgheitskräfte des Pantographen, die wesentlich durch die Masse des Schleifstücks mitbestimmt werden, möglichst gering zu halten. Gleichzeitig ist es für einen effektiven Betrieb der mit Elektromotoren betriebenen Fahrzeuge notwendig, für eine ausreichende elektrische Leitfähigkeit beziehungsweise einen niedrigen elektrischen Widerstand der Schleifleiste zu sorgen. Aus diesem Grund hat sich eine Metallimprägnierung des porösen Kohlenstoffs als nicht befriedigend erwiesen, da eine hierdurch erzielte gute elektrische Leitfähigkeit einhergeht mit einer an sich nicht erwünschten Erhöhung der Masse der Schleifleiste aufgrund des durch die Imprägnierung ausgebildeten Metallanteils in der Schleifleiste.

Ausgehend von diesem Stand der Technik wurde daher bereits in der EP 1 491 385 A1 vorgeschlagen, Maßnahmen zu ergreifen, die bei einer möglichst niedrigen Dichte, also einer entsprechend geringen Masse der Schleifleiste, die gleichzeitige Ausbildung eines niedrigen spezifischen elektrischen Widerstands der Schleifleiste, also einer guten elektrischen Leitfähigkeit, ermöglicht.

Als Lösung hierzu wird in der EP 1 491 385 A1 vorgeschlagen, Schleifleisten basierend auf einem Materialverbund herzustellen, der einen Lagenaufbau aus Kohlenstofflagen aufweist, zwischen denen jeweils metallische Gittergewebe angeordnet sind, die sich in einer Ebene quer zur Gleitrichtung der Schleifleiste und in Vorspannrichtung der durch die Gleitkontakteinrichtung auf die Schleifleiste wirkenden Vorspannkraft erstrecken.

Auch die DE 93 16 425 U1 sowie die SU 1 572 847 A1 und die FR 1 110 518 A zeigen einen ähnlichen lagenweisen Aufbau von Schleifleisten, wobei diese kein metallisches Gittergewebe, sondern jeweils einen massiven und formschlüssig mit einem Kohlenstoff-Formkörper verbundenen Metallkörper offenbaren.

Aufgrund des vorstehend wiedergegebenen Lagenaufbaus der bekannten Schleifleisten erweist sich deren Herstellung als relativ aufwendig, da zunächst einzelne Kohlenstoff-Lagen hergestellt werden müssen, dann der vorstehend wiedergegebene Lagenaufbau durch Anordnung der Gittergewebe zwischen den einzelnen Kohlenstofflagen hergestellt und erst anschließend ein Verbundkörper oder Kohlenstoff-Formkörper hergestellt werden kann, der in seiner Gesamtheit die Schleifleiste ausbildet.

Die DE 44 41 339 A1 offenbart eine Schleifleiste, mit einem Kohlenstoff-Formkörper in welchen ein massiver Gussmetallkörper eingebettet und formschlüssig mit diesem verbunden ist, wobei ein in dem Kohlenstoff-Formkörper zuvor vorhandener Schlitz durch den Gussmetallkörper vollständig ausgefüllt wird.

In der FR 1 110 518 A wird eine Imprägnierung der Kontaktflächen aneinandergrenzender Werkstoffe mit einem metallischen Material offenbart, jedoch zeigt diese nicht die Absicht einer Verbesserung der elektrischen Leitfähigkeit.

Der vorliegenden Erfindung liegt daher die Aufgabe zugrunde, eine Schleifleiste sowie ein Verfahren zur Herstellung einer Schleifleiste, welche eine möglichst hohe elektrische Leitfähigkeit und gleichzeitig eine möglichst geringe Masse aufweist vorzuschlagen, die beziehungsweise das eine vereinfachte Herstellung einer Schleifleiste, ermöglicht.

Zur Lösung dieser Aufgabe weist die erfindungsgemäße Schleifleiste die Merkmale des Anspruchs 1 auf. Das erfindungsgemäße Verfahren zur Herstellung einer Schleifleiste weist die Merkmale des Anspruchs 11 auf.

Bei der erfindungsgemäßen Schleifleiste weist die Leiteinrichtung zumindest eine sich in einer Ebene quer zur Gleitrichtung und in Richtung der Vorspannkraft erstreckende Leitschicht auf, die durch eine an zumindest einer Flanke eines sich quer zur Gleitrichtung im Kohlenstoff-Formkörper erstreckenden Schlitzes angeordnete Schicht eines metallischen Leitmaterials gebildet ist, wobei die Leitschicht in Form eines Oberflächenauftrags des metallischen Leitmaterials auf der Flanke des Schlitzes ausgebildet ist.

Aufgrund der erfindungsgemäßen Ausgestaltung der Schleifleiste ist es möglich, die Schleifleiste ausgehend von einem einstückig ausgebildeten Kohlenstoff-Formkörper herzustellen, der zur Definition der gewünschten Orientierung der Leiteinrichtung im Kohlenstoff-Formkörper Schlitze aufweist. Die Ausbildung der Leiteinrichtung selbst als Leitschicht ermöglicht eine einfache Erzeugung der lokal erhöhten elektrischen Leitfähigkeit im Kohlenstoff-Formkörper durch Ausbildung eines Schlitzes im Kohlenstoff-Formkörper, der zumindest eine Flanke aufweist, die mit einer Schicht aus einem metallischen Leitmaterial versehen ist.

Hierdurch wird eine Schleifleiste ermöglicht, deren Herstellung ohne die Erzeugung eines Lagenverbunds erfolgen kann. Vielmehr erfolgt die räumlich definierte Anordnung der Leiteinrichtung allein durch die Ausbildung des Schlitzes oder mehrerer Schlitze im Kohlenstoffformkörper. Zur Erzeugung der Leiteinrichtung selbst ist es dann lediglich noch notwendig, eine durch den Schlitz definierte Flanke mit einer Schicht aus einem metallischen Leitmaterial zu versehen.

Vorzugsweise ist der Schlitz zwischen kontinuierlich ausgebildeten, sich in Gleitrichtung erstreckenden Stirnrändern des Kohlenstoff-Formkörpers ausgebildet, so dass der Kohlenstoff-Formkörper während des gesamten Herstellungsvorgangs einstückig ausgebildet bleiben kann.

Die Leitschicht kann in ihrer einfachsten Ausführungsform beispielsweise durch eine Imprägnierung der Schlitzflanke mit einem metallischen Leitmaterial erfolgen, so dass der Schlitz selbst frei bleibt. Hieraus ergeben sich insbesondere zusätzliche vorteilhafte Effekte, da der Schlitz für eine verbesserte Wärmeabfuhr aus der Schleifleiste im Betrieb sorgt, so dass auch bei hohen Strömen eine übermäßige Erwärmung der Schleifleiste vermieden werden kann.

Die vorteilhafte Ausbildung einer Leitschicht basierend auf einem im Kohlenstoff-Formkörper ausgebildeten Schlitz ermöglicht es auch, die Leitschicht durch eine Beschichtung, also einen Oberflächenauftrag eines metallischen Leitmaterials auf die Flanke des Schlitzes auszubilden.

Um eine Leitschicht zu erzeugen, die eine besonders gute Leitfähigkeit aufweist, ist es vorteilhaft, wenn die metallische Leitschicht im wesentlichen aus Aluminium oder Kupfer gebildet ist.

Besonders vorteilhaft hinsichtlich einer kontinuierlichen Ausbildung erhöhter elektrischer Leitfähigkeit in der Schleifleiste ist es, wenn der Schlitz im Kohlenstoff-Formkörper in Richtung der Vorspannkraft durchgehend ausgebildet ist.

Um eine größere Kontaktfläche zwischen dem Fahrdraht und dem Leitmaterial zu erreichen, ist es vorteilhaft, wenn der Kohlenstoff-Formkörper eine Mehrzahl von in Längsrichtung des Kohlenstoff-Formkörpers verlaufenden Schlitzen aufweist.

Wenn der Kohlenstoff-Formkörper eine Mehrzahl von Schlitzreihen mit jeweils einer Mehrzahl von in Längsrichtung des Kohlenstoff-Formkörpers verlaufenden Schlitzen aufweist, könne die einzelnen Schlitze mit relativ kurzen Längen ausgeführt sein.

Alternativ kann der Kohlenstoff-Formkörper eine Mehrzahl von diagonal zur Längsrichtung des Kohlenstoff-Formkörpers verlaufenden und parallel angeordneten Schlitzen aufweisen.

Wenn die Schleifleiste aus einer Mehrzahl von Schleifleistenteilstücken zusammengesetzt ist, die zur Ausbildung von in Gleitrichtung einander überdeckenden Teilstückenden zur Gleitrichtung schräg verlaufende Stirnränder aufweisen, können zur Herstellung von Schleifleisten relativ kleine Autoklaven verwendet werden, deren länge zur Herstellung der Schleifleistenteilstücke ausreichend ist, so dass die Anlagenkosten für die Produktion entsprechend gering gehalten werden können.

Bei dem erfindungsgemäßen Verfahren zur Herstellung einer Schleifleiste erfolgt die Ausbildung der Leiteinrichtung in einem ersten Verfahrensschritt im Kohlenstoff-Formkörper durch Erzeugung zumindest eines sich quer zur Gleitrichtung und in Richtung der Vorspannkraft erstreckenden Schlitzes und der Ausbildung einer Leitschicht an zumindest einer Flanke des Schlitzes in einem nachfolgenden Verfahrensschritt.

Das erfindungsgemäße Verfahren ermöglicht somit die Herstellung einer Schleifleiste basierend auf einem Kohlenstoff-Formkörper, so dass zur Herstellung der Schleifleiste lediglich noch die Ausbildung zumindest eines Schlitzes mit nachfolgender Ausbildung einer Leitschicht an einer Flanke des Schlitzes erfolgen muss.

Besonders vorteilhaft ist es, wenn zur Ausbildung der Leitschicht ein metallisches Leitmaterial auf eine Flanke des Schlitzes aufgebracht wird.

Unabhängig davon, ob die Leitschicht in der Oberfläche der Flanke oder auf der Oberfläche der Flanke ausgebildet ist, kann in einer vorteilhaften Variante die Ausbildung der Leitschicht durch Eintauchen des mit dem zumindest einen Schlitz versehenen Kohlenstoff-Formkörpers in ein metallisches Bad erfolgen.

Um die zur Ausbildung einer Leitschicht bestimmten Flächen eindeutig zu definieren, ist es vorteilhaft, den Kohlenstoff-Formkörper mit einer Maskierung zu versehen.

Zur Ausbildung des zumindest einen Schlitzes im Kohlenstoff-Formkörper kann beispielsweise ein abrasives Verfahren verwendet werden, wobei insbesondere die Einbringung des zumindest eines Schlitzes vermittels eines Wasserstrahlschneidverfahrens vorteilhaft ist.

Bevorzugte Ausführungsformen des Schleifstücks sowie bevorzugte Varianten des Verfahrens zur Herstellung eines Schleifstücks werden anhand der Figuren nachfolgend erläutert.

Es zeigen:
- **Fig. 1:**: Eine mit einer Schleifleiste bestückte Gleitkontakteinrichtung im Betrieb;
- **Fig. 2:**: eine weitere Ausführungsform einer Schleifleiste in Querschnittsdarstellung;
- **Fig. 3:**: noch eine weitere Ausführungsform einer Schleifleiste in Querschnittsdarstellung;
- **Fig. 4:**: ein zur Herstellung einer Schleifleiste in einem Metallbad angeordneter Kohlenstoff-Formkörper;
- **Fig. 5:**: eine alternative Ausführung einer Befüllungsstation;
- **Fig. 6:**: die alternative Ausführung der Befüllungsstation in Draufsicht;
- **Fig. 7:**: eine Schleifleiste mit mehreren Schlitzreihen;
- **Fig. 8:**: eine Schleifleiste mit diagonal verlaufenden Schlitzen;
- **Fig. 9:**: eine aus mehreren Schleifleistenteilstücken zusammengesetzte Schleifleiste.

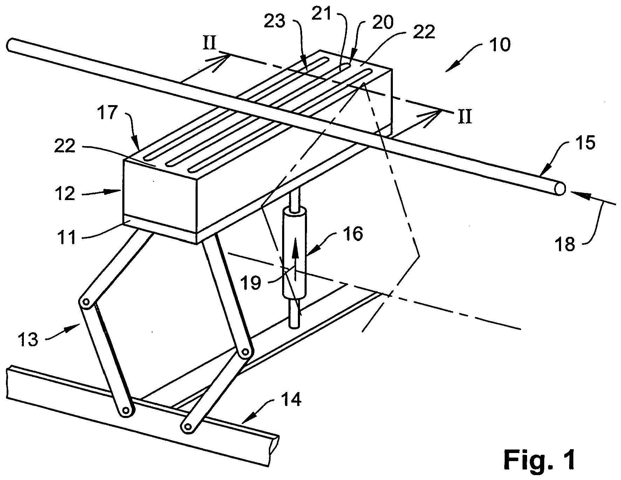

**Fig. 1** zeigt eine Gleitkontakteinrichtung 10, die auf einem Schleifleistenträger 11 mit einer Schleifleiste 12 bestückt ist. Die Gleitkontakteinrichtung 10 weist eine Gelenkeinrichtung 13 auf, die den Schleifleistenträger 11 mit einer Montagebasis 14 verbindet, die beispielsweise auf einem hier nicht näher dargestellten Triebwagen eines Schienenfahrzeugs angeordnet sein kann. Zur Erzeugung einer Vorspannung, mit der die Schleifleiste 12 federnd gegen einen oberhalb der Schleifleiste 12 längs geführten Fahrdraht 15 andrückbar ist, weist die Gleitkontakteinrichtung 10 ein hier als kombinierte Feder-/Dämpfereinrichtung ausgebildete Andruckeinrichtung 16 auf, die zwischen der Montagebasis 14 und dem Schleifleistenträger 11 wirksam ist.

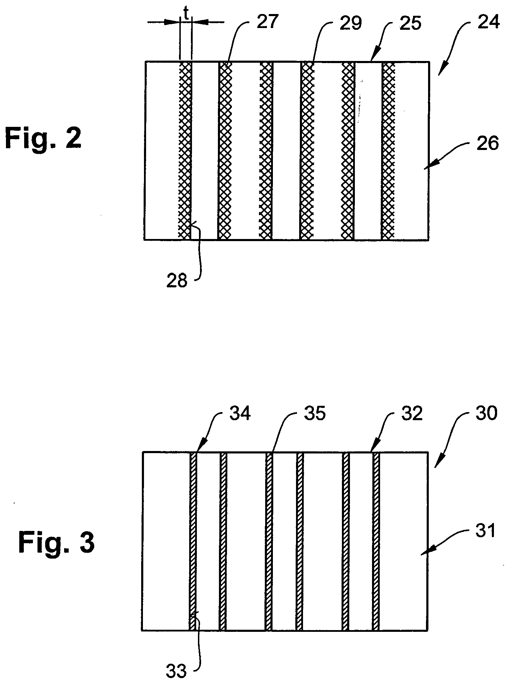

**Fig. 2** zeigt eine Schleifleiste 24 in einer Schnittansicht, die mit Schlitzen 25 versehen ist, welche in ihrer Anordnung und Ausführung den in der **Fig. 1** dargestellten Schlitzen 20 entspricht. Ebenfalls übereinstimmend mit dem anhand der **Fig. 1** erläuterten Ausführungsbeispiel der Schleifleiste 12 sind die Schlitze 25 in einem Kohlenstoff-Formkörper 26 angeordnet, der einstückig ausgebildet ist.

Die Schleifleiste 24 weist Leitschichten 27 auf, die durch eine Imprägnierung von Flanken 28 der Schlitze 25 mit Leitmaterial 29 gebildet sind. Aufgrund dieser Imprägnierung kommt es, wie in **Fig. 2** dargestellt, in einer Oberflächenschicht der Flanken 28 bis hin zu einer definierten Eindringtiefe t zur Ausbildung der Leitschichten 27. Es kann dabei noch zusätzlich zu einem Schichtaufbau auf den Flanken 28 kommen, insbesondere in dem Fall, wenn durch eine in die Oberfläche der Flanken 28 eindringende Imprägnierung ein weiteres Eindringen eines metallischen Leitmaterials in die Oberfläche des Kohlenstoff-Formkörpers 26 blockiert ist und dann bei Fortsetzung der Beaufschlagung der Flanken 28 mit Leitermaterial sich ein entsprechender Schichtaufbau auf den Flanken 28 ausbildet.

**Fig. 3** zeigt in einer weiteren Ausführungsform eine Schleifleiste 30, die in einem Kohlenstoff-Formkörper 31 ausgebildete Schlitze 32 aufweist, die in ihrer Anordnung und Ausbildung den Schlitzen 20 bzw. 25der Schleifleisten 12 und 24 entsprechen.

Die Flanken 33 der Schlitze 32 sind mit Leitschichten 34 versehen, die im Wesentlichen durch eine Abscheidung eines metallischen Leitermaterials 35 auf den Flanken 33 erzeugt sind. Unabhängig von der jeweiligen Ausführungsform der Schleifleisten 12, 25 oder 30 mit Leitschichten 23, 27 oder 34 stimmen die Leitschichten insoweit überein, als sie im bzw. am Kohlenstoff-Formkörper 17, 26 oder 31 in ihren räumlichen Abmessungen und in ihrer Orientierung definierte Schichten ausbilden, die gegenüber der durch den Kohlenstoff-Formkörper definierten Kohlenstoff-Umgebung eine erhöhte elektrische Leitfähigkeit aufweisen.

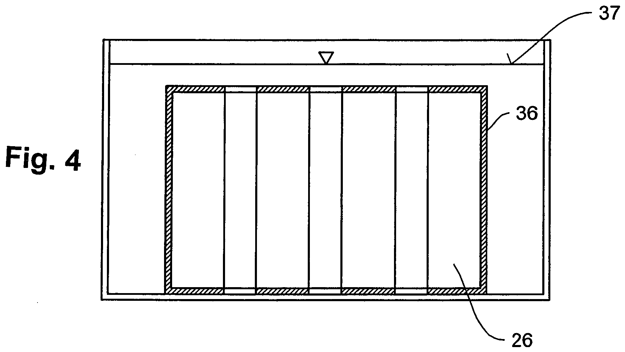

**Fig. 4** zeigt eine Möglichkeit zur Herstellung der in **Fig. 2** dargestellten Schleifleiste 24, bei der der Kohlenstoff-Formkörper 26 mit Ausnahme der Flanken 28 mit einer Oberflächenmaskierung 36 versehen wird und anschließend in ein metallisches Bad 37 eingetaucht wird. Je nach Eintauchdauer und Zusammensetzung des metallischen Bades 37 bilden sich dann die in **Fig. 2** dargestellten Leitschichten 27 bis zu der gewünschten Eindringtiefe t aus.

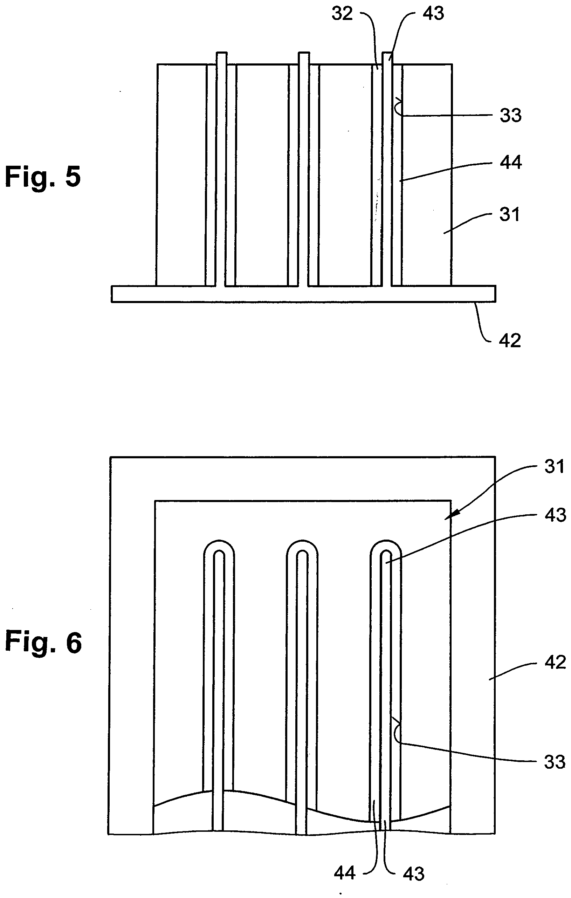

**Die** **Fig. 5** und **6** zeigen eine Möglichkeit zur Herstellung der in **Fig. 3** dargestellten Schleifleiste 30, bei der der Kohlenstoff-Formkörper 31 auf einer Dichtplatte 42 angeordnet wird, die mit Kernstegen 43 in die Schlitze 32 derart eingreift, dass zwischen den Kernstegen 43 und den diesen gegenüberliegenden Flanken 33 der Schlitze 32 Füllräume 44 ausgebildet sind, derart, dass nach Befüllen der Füllräume 44 mit dem flüssigen Leitmaterial 35 **(****Fig. 3****)** und anschließender Erstarrung des Leitmaterials 35 die in **Fig. 3** dargestellten Leitschichten 34 auf den Flanken 33 ausgebildet sind.

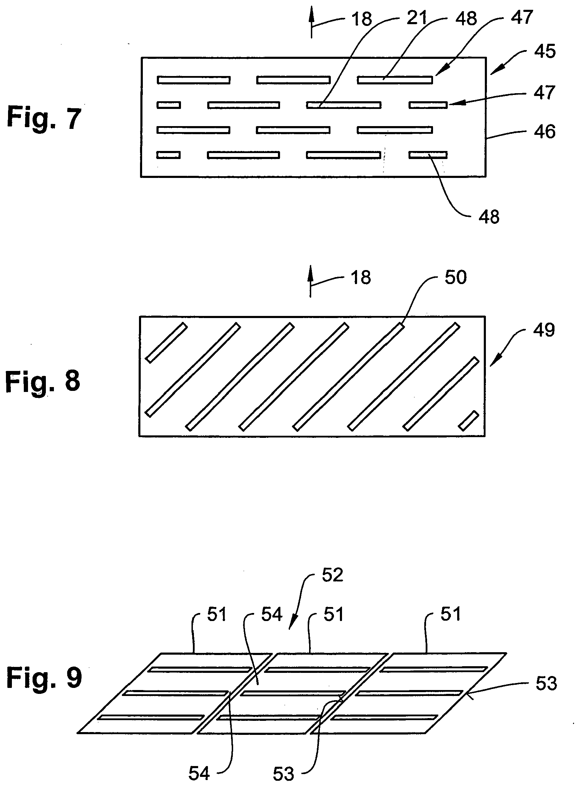

**Fig. 7** zeigt in Draufsicht eine Schleifleiste 45 mit mehreren, hier parallel zueinander in Längsrichtung eines Kohlenstoff-Formkörpers 46 verlaufenden Schlitzreihen 47, die jeweils vorzugsweise äquidistant angeordnete Schlitze 48 mit Leitmaterial 21 aufweisen. Die Schlitze 48 benachbarter Schlitzreihen 47 sind versetzt zueinander angeordnet, so dass in Gleitrichtung 18 eine Schlitzüberdeckung ausgebildet ist.

**Fig. 8** zeigt eine Schleifleiste 49 mit diagonal zur Gleitrichtung 18 verlaufenden Schlitzen 50, wobei ebenfalls in Gleitrichtung 18 eine Schlitzüberdeckung ausgebildet ist.

In **Fig. 9** ist eine aus einer Mehrzahl von Schleifleistenteilstücken 51 zusammengesetzte Schleifleiste 52 dargestellt, die jeweils schräg zur Gleitrichtung 18 verlaufende Stirnränder 53 aufweisen, derart, dass sich Teilstückenden 54 in Gleitrichtung 18 überdecken.

## Patentansprüche

1. Schleifleiste (12, 24, 30, 45, 49, 52) für eine mit Vorspannung gegen einen Fahrdraht (15) anliegende Gleitkontakteinrichtung (10), insbesondere zur Stromversorgung von Schienenfahrzeugen, mit einem Kohlenstoff-Formkörper (17, 26, 31, 46) und zumindest einer in dem Kohlenstoff-Formkörper angeordneten, metallischen Leiteinrichtung zur Ausbildung einer lokal erhöhten elektrischen Leitfähigkeit, wobei die Leiteinrichtung zumindest eine sich in einer Ebene quer zur Gleitrichtung (18) und in Richtung einer Vorspannkraft (19) erstreckende Leitschicht (23, 27, 34) aufweist, die durch eine an zumindest einer Flanke (28, 33) eines sich quer zur Gleitrichtung im Kohlenstoff-Formkörper erstreckenden Schlitzes (20, 25, 32, 48, 50) angeordnete Schicht eines metallischen Leitmaterials (21, 29, 35) gebildet ist,
**dadurch gekennzeichnet,**
**dass** die Leitschicht in Form eines Oberflächenauftrags des metallischen Leitmaterials auf der Flanke des Schlitzes ausgebildet ist, so dass der Schlitz selbst frei bleibt.

2. Schleifleiste nach Anspruch 1,
**dadurch gekennzeichnet,**
**dass** der Schlitz (20, 25, 32, 48, 50) zwischen zwei kontinuierlich ausgebildeten, sich in Gleitrichtung erstreckenden Stirnrändern (22) des Kohlenstoff-Formkörpers (17, 26, 31, 46) ausgebildet ist.

3. Schleifleiste nach Anspruch 1 oder 2,
**dadurch gekennzeichnet,**
**dass** die Leitschicht (27) durch eine Imprägnierung einer Flanke (28) des Schlitzes (25) mit einem metallischen Leitmaterial (29) ausgebildet ist.

4. Schleifleiste nach Anspruch 1 oder 2,
**dadurch gekennzeichnet,**
**dass** die Leitschicht (34) durch eine Beschichtung einer Flanke (33) des Schlitzes (32) mit einem metallischen Leitmaterial (35) ausgebildet ist

5. Schleifleiste nach einem der vorangehenden Ansprüche,
**dadurch gekennzeichnet,**
**dass** die metallische Leitschicht (23, 27, 34) im Wesentlichen aus Aluminium oder Kupfer gebildet ist.

6. Schleifleiste nach einem der vorangehenden Ansprüche,
**dadurch gekennzeichnet,**
**dass** der Schlitz (20, 25, 32, 48, 50) im Kohlenstoff-Formkörper(17, 26, 31) in Richtung der Vorspannkraft (19) durchgehend ausgebildet ist.

7. Schleifleiste nach einem der vorangehenden Ansprüche,
**dadurch gekennzeichnet,**
**dass** der Kohlenstoff-Formkörper (17, 26, 31, 46) eine Mehrzahl von in Längsrichtung des Kohlenstoff-Formkörpers verlaufenden Schlitzen aufweist.

8. Schleifleiste nach Anspruch 7,
**dadurch gekennzeichnet,**
**dass** der Kohlenstoff-Formkörper (46) eine Mehrzahl von Schlitzreihen (47) mit jeweils einer Mehrzahl von in Längsrichtung des Kohlenstoff-Formkörpers verlaufenden Schlitzen (48) aufweist.

9. Schleifleiste nach einem der Ansprüche 1 bis 6,
**dadurch gekennzeichnet,**
**dass** der Kohlenstoff-Formkörper eine Mehrzahl von diagonal zur Längsrichtung des Kohlenstoff-Formkörpers verlaufenden und parallel angeordneten Schlitzen (50) aufweist.

10. Schleifleiste nach einem der vorangehenden Ansprüche,
**dadurch gekennzeichnet,**
**dass** die Schleifleiste (52) aus einer Mehrzahl von Schleifleistenteilstücken (51) zusammengesetzt ist, die zur Ausbildung von in Gleitrichtung (18) einander überdeckenden Teilstückenden (54) zur Gleitrichtung schräg verlaufende Stirnränder (53) aufweisen.

11. Verfahren zur Herstellung einer Schleifleiste (12, 24, 30) für eine mit Vorspannung gegen einen Fahrdraht (15) anliegende Gleitkontakteinrichtung (10), insbesondere zur Stromversorgung von Schienenfahrzeugen, mit einem Kohlenstoff-Formkörper (17, 26, 31) und zumindest einer in dem Kohlenstoff-Formkörper angeordneten, metallischen Leiteinrichtung zur Ausbildung einer lokal erhöhten elektrischen Leitfähigkeit, wobei zur Ausbildung der Leiteinrichtung in einem ersten Verfahrensschritt im Kohlenstoff-Formkörper zumindest ein sich in einer Ebene quer zur Gleitrichtung (18) und in Richtung der Vorspannkraft (19) erstreckender Schlitz (20, 25, 32) erzeugt wird, und in einem nachfolgenden Verfahrensschritt zumindest eine Flanke (28, 33) des Schlitzes mit einer Leitschicht (23, 27, 34) versehen wird,
**dadurch gekennzeichnet,**
**dass** die Leitschicht in Form eines Oberflächenauftrags des metallischen Leitmaterials auf die Flanke des Schlitzes aufgebracht wird, so dass der Schlitz selbst frei bleibt.

12. Verfahren nach Anspruch 11,
**dadurch gekennzeichnet,**
**dass** zur Ausbildung der Leitschicht (23, 27, 34) der mit dem zumindest einen Schlitz (20, 25, 32) versehene Kohlenstoff-Formkörper (17, 26, 31) in ein metallisches Bad (37) getaucht wird.

13. Verfahren nach einem der Ansprüche 11 oder 12,
**dadurch gekennzeichnet,**
**dass** der Kohlenstoff-Formkörper (17, 26, 31) zur Definition der zu beschichtenden Fläche mit einer Maskierung (36) versehen wird.

14. Verfahren nach einem der vorangehenden Ansprüche,
**dadurch gekennzeichnet,**
**dass** die Ausbildung des zumindest einen Schlitzes (20, 25, 32) im Kohlenstoff-Formkörper (17, 26, 31) durch ein abrasives Verfahren, insbesondere ein Wasserstrahlschneidverfahren, erfolgt.

## Claims

1. A sliding strip (12, 24, 30, 45, 49, 52) for a sliding contact device (10) that rests in prestressed manner against an overhead wire (15), particularly for supplying electrical power to rail vehicles, having a carbon moulding (17, 26, 31, 46) and at least one metallic conduction device that is arranged in the carbon moulding in order to locally increase electrical conductivity, the conduction device having at least one conduction layer (23, 27, 34) which extends in a plane transverse to the sliding direction (18) and in the direction of a prestressing force (19) and which is formed by a layer of a metallic conductive material (21, 29, 35) that is arranged on at least one flank (28, 33) of a slot (20, 25, 32, 48, 50) that extends transversely to the sliding direction in the carbon moulding,
**characterized in that**
the conduction layer is realized in the form of a surface coating of the metallic conductive material on the flank of the slot in such a manner that the slot itself remains free.

2. The sliding strip according to claim 1,
**characterized in that**
the slot (20, 25, 32, 48, 50) is formed between two continuously formed frontal edges (22) of the carbon moulding (17, 26, 31, 46) which extend in the sliding direction.

3. The sliding strip according to claim 1 or 2,
**characterized in that**
the conduction layer (27) is formed by impregnating a flank (28) of the slot (25) with a metallic conductive material (29).

4. The sliding strip according to claim 1 or 2,
**characterized in that**
the conduction layer (34) is formed by coating a flank (33) of the slot (32) with a metallic conductive material (35).

5. The sliding strip according to any of the previous claims,
**characterized in that**
the metallic conduction layer (23, 27, 34) consists essentially of aluminium or copper.

6. The sliding strip according to any of the previous claims,
**characterized in that**
the slot (20, 25, 32, 48, 50) is formed continuously in the carbon moulding (17, 26, 31) in the direction of the prestressing force (19).

7. The sliding strip according to any of the previous claims,
**characterized in that**
the carbon moulding (17, 26, 31, 46) has a plurality of slots extending in the longitudinal direction of the carbon moulding.

8. The sliding strip according to claim 7,
**characterized in that**
the carbon moulding (46) has a plurality of slot rows (47) each of which has a plurality of slots (48) extending in the longitudinal direction of the carbon moulding.

9. The sliding strip according to any of claims 1 to 6,
**characterized in that**
the carbon moulding has a plurality of slots (50) aligned parallel to each other and diagonally to the longitudinal direction of the carbon moulding.

10. The sliding strip according to any of the previous claims,
**characterized in that**
the sliding strip (52) is made up of a plurality of sliding strip segments (51), which have frontal edges (53) aligned at an angle to the sliding direction to form segment ends (54) that overlap each other in the sliding direction (18).

11. A method for manufacturing a sliding strip (12, 24, 30) for a sliding contact device (10) that rests in prestressed manner against an overhead wire (15), particularly for supplying electrical power to rail vehicles, having a carbon moulding (17, 26, 31) and at least one metallic conduction device that is arranged in the carbon moulding, in order to locally increase electrical conductivity, wherein, in order to form the conduction device, in a first method step at least one slot (20, 25, 32) extending transversely to the sliding direction (18) and in the direction of the prestressing force (19) is created in the carbon moulding, and in a subsequent method step at least one flank (28, 33) of the slot is provided with a conduction layer (23, 27, 34),
**characterized in that**
the conduction layer is applied to the flank of the slot in the form of a surface coating of the metallic conductive material in such a manner that the slot itself remains free.

12. The method according to claim 11,
**characterized in that**
in order to form the conduction layer (23, 27, 34), the carbon moulding (17, 26, 31) provided with the at least one slot (20, 25, 32) is immersed in a metal bath (37).

13. The method according to any of claims 11 or 12,
**characterized in that**
the carbon moulding (17, 26, 31) is covered with a masking means (36) in order to define the surface to be coated.

14. The method according to any of the previous claims,
**characterized in that**
the at least one slot (20, 25, 32) is formed in the carbon moulding (17, 26, 31) by an abrasive process, particularly a water jet cutting process.

## Revendications

1. Bande de frottement (12, 24, 30, 45, 49, 52) pour un dispositif de contact de glissement (10) qui est en contact avec un fil de contact (15) sous prétension, notamment pour l'alimentation électrique des véhicules ferroviaires, la bande de frottement comprenant un corps moulé de carbone (17, 26, 31, 46) et au moins un dispositif conducteur métallique qui est disposé dans le corps moulé de carbone afin d'augmenter localement la conductivité électrique, le dispositif conducteur ayant au moins une couche conductrice (23, 27, 34) qui s'étend dans un plan perpendiculaire à la direction de glissement (18) et dans la direction d'une force de prétension (19) et qui est formée par une couche d'un matériau conducteur métallique (21, 29, 35) disposée sur au moins un flanc (28, 33) d'une fente (20, 25, 32, 48, 50) qui s'étend perpendiculairement à la direction de glissement dans le corps moulé de carbone,
**caractérisée en ce que**
la couche conductrice est réalisée sous la forme d'un revêtement de surface du matériau conducteur métallique sur le flanc de la fente de sorte que la fente elle-même reste libre.

2. Bande de frottement selon la revendication 1,
**caractérisée en ce que**
la fente (20, 25, 32, 48, 50) est formée entre deux bords frontaux (22) continus du corps moulé de carbone (17, 26, 31, 46) qui s'étendent dans la direction de glissement.

3. Bande de frottement selon la revendication 1 ou 2,
**caractérisée en ce que**
la couche conductrice (27) est formée en imprégnant un flanc (28) de la fente (25) d'un matériau conducteur métallique (29).

4. Bande de frottement selon la revendication 1 ou 2,
**caractérisée en ce que**
la couche conductrice (34) est formée en revêtant un flanc (33) de la fente (32) d'un matériau conducteur métallique (35).

5. Bande de frottement selon l'une quelconque des revendications précédentes,
**caractérisée en ce que**
la couche conductrice (23, 27, 34) métallique est sensiblement fait d'aluminium ou de cuivre.

6. Bande de frottement selon l'une quelconque des revendications précédentes,
**caractérisée en ce que**
la fente (20, 25, 32, 48, 50) est formée de manière continue dans la direction de la force de prétension (19) dans le corps moulé de carbone (17, 26, 31).

7. Bande de frottement selon l'une quelconque des revendications précédentes,
**caractérisée en ce que**
le corps moulé de carbone (17, 26, 31, 46) a une pluralité de fentes qui s'étendent dans la direction longitudinale du corps moulé de carbone.

8. Bande de frottement selon la revendication 7,
**caractérisée en ce que**
le corps moulé de carbone (46) a une pluralité de rangées de fentes (47) dont chacune a une pluralité de fentes (48) qui s'étendent dans la direction longitudinale du corps moulé de carbone.

9. Bande de frottement selon l'une quelconque des revendications 1 to 6,
**caractérisée en ce que**
le corps moulé de carbone a une pluralité de fentes (50) qui s'étendent en diagonale à la direction longitudinale du corps moulé de carbone et qui sont disposées en parallèle l'une à l'autre.

10. Bande de frottement selon l'une quelconque des revendications précédentes,
**caractérisée en ce que**
la bande de frottement (52) est composée d'une pluralité de segments de bande de frottement (51) qui ont des bords frontaux (53) qui s'étendent obliquement à la direction de glissement afin de former des extrémités de segment (54) qui se chevauchent dans la direction de glissement (18).

11. Procédé de production d'une bande de frottement (12, 24, 30) pour un dispositif de contact de glissement (10) qui est en contact avec un fil de contact (15) sous prétension, notamment pour l'alimentation électrique des véhicules ferroviaires, la bande de frottement comprenant un corps moulé de carbone (17, 26, 31, 46) et au moins un dispositif conducteur métallique qui est disposé dans le corps moulé de carbone afin d'augmenter localement la conductivité électrique, dans lequel, afin de former le dispositif conducteur, au moins une fente (20, 25, 32) s'étendant dans un plan perpendiculaire à la direction de glissement (18) et dans la direction de la force de prétension (19) est produite dans le corps moulé de carbone dans une première étape du procédé et au moins un flanc (28, 33) de la fente est fourni d'une couche conductrice (23, 27, 34) dans une étape suivante du procédé,
**caractérisé en ce que**
la couche conductrice est appliquée au flanc de la fente sous la forme d'un revêtement de surface du matériau conducteur métallique de telle manière que la fente elle-même reste libre.

12. Procédé selon la revendication 11,
**caractérisé en ce**
**qu'**afin de former la couche conductrice (23, 27, 34), le corps moulé de carbone (17, 26, 31) fourni de l'au moins une fente (20, 25, 32) est immergé dans un bain métallique (37).

13. Procédé selon l'une quelconque des revendications 11 ou 12,
**caractérisé en ce que**
le corps moulé de carbone (17, 26, 31) est fourni d'un masque (36) afin de définir la surface à revêtir.

14. Procédé selon l'une quelconque des revendications précédentes,
**caractérisé en ce que**
l'au moins une fente (20, 25, 32) est formée dans le corps moulé de carbone (17, 26, 31) par un procédé abrasif, notamment un procédé de découpe au jet d'eau.
